# EUROPEAN PATENT APPLICATION

(11) **EP 1 298 843 A2**
(43) Date of publication of application: **02.04.2003**
(21) Application number: 02256765.5
(22) Date of filing: 27.09.2002
(51) Int. Cl.: H04L 12/24, H04L 29/12

(54) **Replicated naming service to support a telecommunications network**

(30) Priority: 28.09.2001 US 325936 P
(71) Applicant: Tyco Telecommunications (US) Inc., Morristown, NJ 07960 (US)
(72) Inventor: Cereja, Nevton, Eatontown, NJ 07724 (US); Hoyes, Francisco Rafael Lorenzo, Eatontown, NJ 07724 (US)
(74) Representative: Simons, Alison Diane

(57) **Abstract**

A replicated naming service is created and maintained to provide configuration and topology information for a network, such as an undersea cable system, to a network management system (NMS). Designated hosts are chosen in each element management system (EMS) subnetwork (or cable station) to run a replicated naming server and a replication mechanism is set up in all of the hosts. The replicated naming servers are identified throughout the network and each host publishes configuration information to each of the replicated naming servers. Thus, each replicated naming server provides configuration and topology information for substantially an entire network. In one embodiment, the naming service is implemented using the Common Object Request Broker Architecture (CORBA) and the configuration information is published periodically using a naming service builder application.

## Description

### RELATED APPLICATIONS

This application claims the benefit of U.S. Provisional Application Serial No. 60/325,936 filed on September 28, 2001, which is fully incorporated herein by reference.

### TECHNICAL FIELD

The present invention relates to network management systems and more particularly, to a system and method of creating and maintaining a replicated naming service to support a telecommunications network.

### BACKGROUND INFORMATION

Telecommunications networks employ a Network Management System (NMS) to manage the network. In order to accomplish this task, the NMS may communicate with several Element Management Systems (EMS), which in turn manage smaller domains of the entire network. One way for the NMS to communicate with each EMS is based on the Common Object Request Broker Architecture (CORBA), which is an open, vendor-independent architecture and infrastructure that computer applications use to work together over networks.

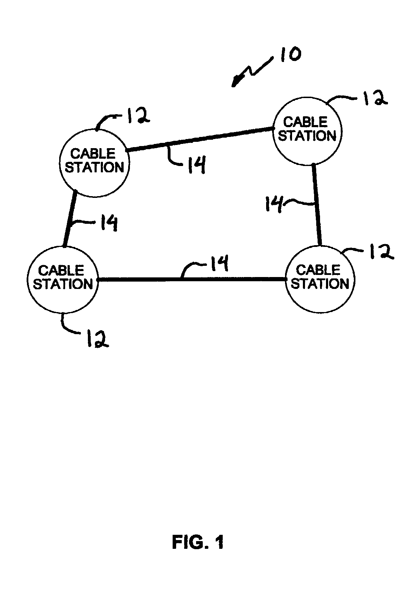

One type of telecommunications network is an undersea transmission network (also referred to as a cable system). A transmission network or cable system 10 is often comprised of several cable stations 12 interconnected by cable segments 14, as shown in FIG. 1. The cable stations 12 include telecommunications equipment (not shown), for example, as a connecting point for land and undersea networks. The set of cable stations 12 and cable segments 14 form a graph with an arbitrary topology. Although the graph formed in the example shown is a simple ring, more complicated topologies are possible (e.g., with branching units).

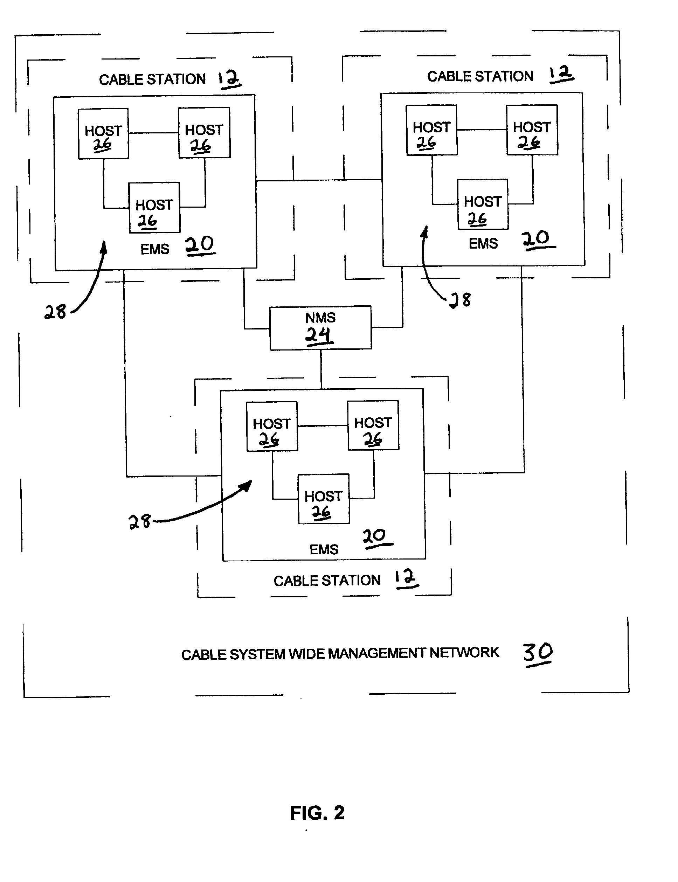

In an exemplary transmission system, as shown in FIG. 2, each EMS is located at an EMS site 20, which is typically co-located with the cable station 12 that it manages. The NMS 24 is typically somewhere else (possibly in one of the cable stations). Each EMS, in turn, is physically comprised of one or more hosts 26, forming an EMS sub-network 28. All of these EMS sub-networks 28 are combined together to form a cable system wide management network 30 to which the NMS 24 has access.

Although CORBA makes physical location transparent to applications, it is important to know the actual physical architecture of the system because it has performance implications. At startup, the NMS 24 needs to determine what there is to be managed in the network (i.e., the configuration information) and what the network looks like (i.e., topology information). Previously, this information was made available to the NMS by manual provisioning or by complete auto-discovery. According to manual provisioning, the user manually enters the topological information in the NMS by typing through a user interface. Manual provisioning is a labor intensive and more error-prone solution due to the potentially large amount and complexity of information to be entered. The user provisioning the system typically must have a view of the whole system. According to complete auto-discovery, the NMS connects to a Local or Global Area Network and uses a network management protocol to detect the equipment to be managed. Although previous auto-discovery solutions were automatic and desirable to some extent, this solution is relatively expensive to implement and is unable to detect nodes or hosts missing in the configuration if the hosts cannot be contacted by the NMS.

Accordingly, there is a need for a system and method of providing network configuration and topology information to a NMS, which is reliable and highly available and has little or no dependence on the EMS or NMS.

### SUMMARY

In accordance with one aspect of the present invention, a method is provided to create and maintain a replicated naming service to support a communications network. The communications network comprises a network management system (NMS) and a plurality of element management systems (EMS) each comprising one or more hosts forming an EMS subnetwork. The method comprises selecting at least one designated host in each EMS subnetwork for hosting a replicated naming server and setting up a replication mechanism in all of the hosts. The method further comprises identifying the replicated naming servers and publishing local configuration information for each of the hosts to each of the replicated naming servers. Each replicated naming server provides substantially complete configuration information pertaining to the communications network. The NMS is capable of obtaining the substantially complete configuration to discover a topology of the communications network by accessing any one of the replicated naming servers.

According to another aspect of the present invention, a method is provided to publish network configuration information to a naming service supporting a communications network. The method of publishing comprises reading at least one local configuration file including local configuration information for at least one host in at least one EMS subnetwork, creating an interoperable object reference (IOR) for each entry in the configuration file, and binding the IOR to a name in at least one naming server.

According to a further aspect of the present invention, a system is provided for creating and maintaining a replicated naming service for use in a communications network. The system comprises a single replicated naming server located in a designated host in each EMS subnetwork. The replicated naming server provides substantially complete configuration information for the communications network to the NMS. At least one local configuration file is located in each host for storing local configuration information pertaining to the host. The system further comprises a naming service builder application executed in each host for periodically publishing the local configuration information to each of the replicated naming servers.

According to a yet another aspect of the present invention, a system is provided for maintaining a naming service to support a communications network. The system identifies a replicated naming server in each EMS subnetwork, periodically publishes local configuration information from each of the hosts to each of the replicated naming servers, and schedules a time for each of the hosts to publish the local configuration information. Each of the hosts publishes the local configuration information at different times.

According to yet a further aspect of the present invention, a naming service builder computer program product is provided for use in a naming service including one or more naming servers. The naming service builder computer program product comprises code for reading a local configuration file for a host in a communications network, code for creating an interoperable object reference (IOR) for each entry in the configuration file, and code for binding the IOR to a name in each of the naming servers.

### BRIEF DESCRIPTION OF THE DRAWINGS

These and other features and advantages of the present invention will be better understood by reading the following detailed description, taken together with the drawings wherein:

FIG. 1 is a schematic diagram illustrating one example of the topology of a transmission network;

FIG. 2 is a functional block diagram of a cable system wide management network;

FIG. 3 is a schematic diagram of EMS sites implementing a replicated naming service, according to one embodiment of the present invention;

FIG. 4 is a flow chart illustrating a method of creating and maintaining the replicated naming service, according to one embodiment of the present invention;

FIG. 5 is a functional block diagram of a single EMS site implementing a replication mechanism, according to one embodiment of the present invention; and

FIG. 6 is a flow chart illustrating a method of publishing configuration information to a naming server, according to one embodiment of the present invention.

### DETAILED DESCRIPTION OF THE PREFERRED EMBODIMENTS

In accordance with the present invention, a naming service is created and maintained to make network configuration and topology information available to a Network Management System (NMS). In the exemplary embodiment, the naming service is created and maintained to provide cable system configuration and topology information for an undersea transmission network. However, the concepts of the present invention, as described in greater detail below, can be used in any type of network.

A naming service is typically used to associate names with information in a network and is made up of one or more naming servers, each of which is a computer process. Where the NMS and EMS communicate using CORBA, the CORBA Naming Service is preferred for making configuration and topology information available to the NMS. Because the CORBA naming service allows for the creation of naming hierarchies, a cable system can be described as a hierarchy. The CORBA Naming Service is a standard service for CORBA applications and is defined in the Object Management Group's (OMG) CORBAservices specification. One example of CORBA software that can be used to implement the naming service is available from Iona Technologies under the names ORBIX and ORBACUS. Although the exemplary embodiment uses the CORBA Naming Service and is designed for use with a CORBA-based NMS, other types of naming services can also be used for other types of NMSs.

The naming service used to make configuration and topology information available to a NMS should preferably satisfy a number of requirements. The naming service should be reliable in that the information is substantially complete and accurate. The naming service should also be highly available in that the information is ready when the NMS needs it. Also, the architecture of the naming service should minimize interdependencies between EMS sites (e.g., cable stations) and assure that each EMS is independent from the NMS, i.e., the EMS does not rely on any NMS resources to perform its own functions.

By varying the number of naming servers and their respective contents, different naming service configurations can be achieved. Three possible configurations that might be used to make network configuration and topology information available include centralized, federated and replicated.

The centralized approach generally has a single naming server and each EMS publishes configuration information to the single naming server. The main disadvantage of the centralized approach is that the naming server represents a single point of failure. Also, if a given EMS is prevented from accessing the centralized server, the naming service will lack information about that EMS site and the NMS has no means to detect the missing EMS site.

A federated naming service, in which a naming server in each EMS contains only the local configuration information for the topology of that EMS site, eliminates the single point of failure problem in the centralized approach. If a given naming server is not accessible, however, the corresponding local configuration information will not be available to the NMS. In addition, this federated approach considerably increases network traffic, by requiring the NMS to connect to each naming server in order to obtain complete configuration and topology information about the entire network.

A replicated naming service combines the best of the centralized and federated solutions. In the replicated approach, there are several replicated naming servers (also referred to as replicas) in the network, and each one of them has complete network configuration and topology information. This solution has a number of benefits. There is no single point of failure. The NMS only needs to contact one replicated naming server (any one) to retrieve the complete network configuration and topology information, thus minimizing network traffic. Once the replicas are created, even if one or more EMSs are not available, the NMS can still obtain initial configuration and topology information about the missing EMS(s) from any one of the available replicas.

One challenge when using the replicated solution is keeping the replicas synchronized with each other. In one example, a simplistic replicated naming service can have a replica per host. In some networks (e.g., a cable system) where there are typically dozens of hosts, keeping the replicas synchronized can generate a considerable amount of traffic when there is a replica per host. According to this example, the total number of updates to synchronize the replicas increases at a rate of order n², where n is the total number of hosts in the network.

To reduce the required updates and resulting traffic, a preferred embodiment of the replicated naming service limits the number of replicated naming servers or replicas per EMS site (or cable station). One exemplary preferred embodiment of the naming service, described in greater detail below, creates and maintains a single replicated naming server in each EMS site (e.g., in each cable station of a cable system). The present invention, however, is not limited to a single replicated naming server per EMS site.

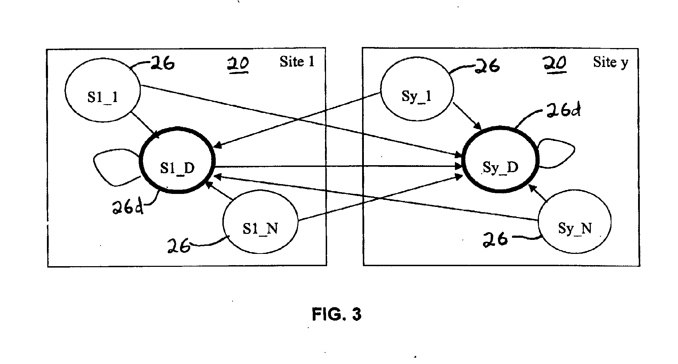

According to one embodiment, FIG. 3 shows two of the hypothetical y EMS sites 20 in a network (e.g., cable stations in a cable system). Each EMS site 20 represents an instance of a distributed EMS. As shown, each EMS site 20 has one or more (N) hosts 26 in its EMS configuration and different EMS sites 20 can have different numbers (N) of hosts 26. In each EMS site 20, one of the hosts 26 is a designated host 26d running the replicated naming server (or replica). All of the hosts 26 in the network, whether designated or not, publish their local configuration information to each of the replicated naming servers only, as will be described in greater detail below. Given a cable system with *y* EMS sites, each host 26 performs a total of *y* updates. As the total number of hosts 26 in the network increases, there is a linear increase in the total number of necessary updates. This reduces the number of updates necessary to keep the replicated naming servers synchronized, when compared with the approach having one replica per host.

Each replicated naming server running on the designated hosts 26d preferably contains substantially complete configuration information for the communications network being managed. The configuration and topology information is thus highly available because many replicated naming servers can be reached and the NMS only needs to access one of the replicated naming servers to discover the network topology as a whole.

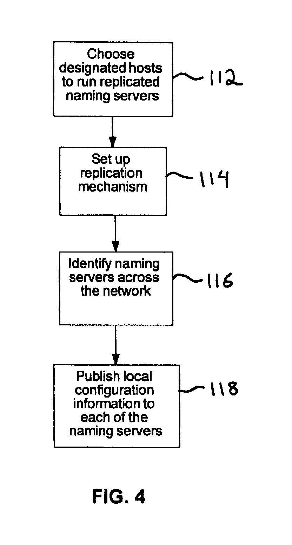

Referring to FIG. 4, one method of creating and maintaining the replicated naming service is described in greater detail. The designated hosts 26d are chosen from the other hosts 26 in the network, step 112. In general, any host 26 that is part of the EMS may be chosen as the designated host 26d. In one preferred embodiment, the designated host 26d is a host 26 that will always be present in any configuration of the distributed EMS and that has a hostname with a specific name pattern. In a cable system, for example, each host performs some specific task in the network management and the hosts are named after the function performed in the network. One host in an exemplary cable system is present in all possible EMS configurations and has a hostname with a specific suffix "_osps". By choosing hosts 26 with the specific suffix "_osps" to be the designated hosts 26d, each EMS in the exemplary cable system has a designated host 26d that can easily be identified. In other types of networks, the designated hosts can be chosen differently.

Once the designated hosts 26d are chosen, a replication mechanism is set up in all of the hosts 26, step 114. In general, setting up the replication mechanism includes installing and configuring the software and files used to create and maintain the replicated naming service, as will be described in greater detail below.

After the replication mechanism is set up, each of the hosts 26 throughout the network identifies the replicated naming servers running on the designated hosts 26d, step 116. Given the design of the distributed EMS, any other host 26 in any other EMS that belongs to the same network or cable system has access to the designated hosts 26d and can access them by name. In one preferred embodiment, each host 26 includes a list of all hosts 26 in the system and the set of designated hosts 26d can be determined at any time from the list of hosts by selecting the specific name patterns from the list. In the exemplary cable system discussed above, the designated hosts having the suffix "_osps" (e.g., Site1_osps, Site2_osps, ...) can be selected from the list of hosts.

In one embodiment based on the Unix operating system, an entry is created for each host 26 in the system in the /etc/hosts configuration file in all hosts 26. The replicated naming servers can then be identified using a *grep* command to search the /etc/hosts file for the specific name pattern of the designated hosts 26d and to create a list of designated hosts 26d. The *grep* command can be executed in each of the hosts 26 by calling a Unix shell script, as is known to those of ordinary skill in the art. The shell script can be installed and configured in each of the hosts 26 as part of the replication mechanism set up process.

In other systems where other naming conventions are used, the designated hosts may be identified differently, for example, by selecting hosts with a specific IP address pattern. In systems without a hosts file listing all hosts, a special configuration file can be created to provide a list of designated hosts. Other search commands or techniques known to those of ordinary skill in the art can also be used to identify the designated hosts 26b running the replicated naming servers.

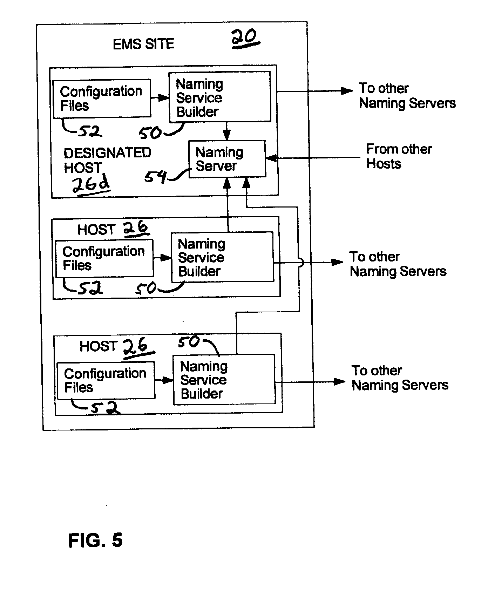

When the replicated naming servers have been identified, each of the hosts 26 publishes its local configuration information to the replicated naming servers, step 118. In one preferred embodiment, a naming service builder application 50, as shown in FIG. 5, is used to publish the local configuration information contained in one or more configuration files 52 on each of the hosts 26 to a replicated naming server 54 on the designated host 26d in each EMS site 20. In the exemplary embodiment of a cable system, configuration information can include information pertaining cable segments, cable terminations, fiber pair terminations, and network elements. In one embodiment, a Unix shell script is used to invoke the naming service builder application 50. For example, a shell script can be configured during the replication mechanism set up to identify the designated hosts (e.g., using the *grep* command) and then invoke the naming service builder application 50 for publishing the configuration information to the replicated naming server 54 on each of the identified designated hosts 26d.

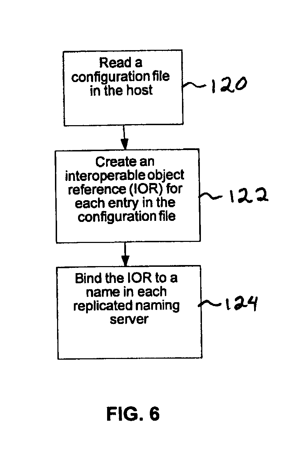

In the preferred embodiment using the CORBA naming service, the naming service builder application 50 is a CORBA application, called naming service builder (*nsb*). Referring to FIG. 6, one method of publishing the configuration information using the CORBA-based *nsb* application is described in greater detail. The *nsb* application 50 reads a configuration file 52, step 120. For each entry in the configuration file 52, the *nsb* application 50 manufactures an interoperable object reference (IOR), step 122, and binds it to a name in each naming server 54, step 124. This invokes operations of the Naming Context CORBA interface known to those of ordinary skill in the art.

The *nsb* application 50 creates a hierarchy of naming contexts some of which are pre-defined according to the naming structure established. In a cable system, for example, "CableSegment" and "FiberPairTermination" may be pre-defined as naming contexts. Other naming context names and the names associated with the IORs are obtained from the configuration file(s) 52.

One advantage of the naming service builder application is that it provides a separate tool that performs the updates "off-line," allowing for a flexible solution. The actual EMS management applications are thus relieved from the task of updating the naming service. Also, no management software or specific EMS application needs to be notified before the replication takes place. Furthermore, the process of publishing the configuration information using the naming service builder application can be exactly the same when executed at installation time and when executed at a later time (e.g., during periodic updates). Also, the replication mechanism uses "single-level" updates, i.e., the updates performed by one host have the same relevance as the updates performed by any other host. In general, the updates are independent from each other and can happen in any order.

Although the preferred embodiment uses the *nsb* application to publish cable system configuration information, the contents and format of configuration files and the tools (e.g., the *nsb* application) used to publish the configuration to the replicated naming servers are not essential to the present invention. Other types of configuration files and/or tools can be used.

According to the preferred method of maintaining the replicated naming service, the naming servers are updated periodically. To update the replicated naming servers, the steps of identifying the replicated naming servers, step 116, and publishing the local configuration information, step 118, are preferably repeated. The periodic updates detect if an EMS site has been added or removed from the network configuration, for example, by searching the /etc/hosts file that is updated as the network configuration changes. The periodicity depends on how often the system configuration is modified. While some systems have volatile configurations, an undersea cable system is a domain with rather static configuration, once installation and commissioning phases are complete.

The replication mechanism can be configured to periodically update the replicated naming servers automatically (i.e., without user interference), ensuring that configuration changes will eventually be available at every replicated naming server for NMS discovering. As the topology changes (e.g., a new host is made available), the new configuration information is automatically published and made available. In one embodiment, the replication mechanism can be configured to be executed as often as once every minute. In an undersea network or other domain having a relatively static configuration, the replication mechanism is preferably configured to be updated at most once a day to at least once a week.

Although periodically updating the replicated naming service is advantageous, it is not mandatory. Systems with static configurations and/or a highly controlled configuration procedure can disable the automatic updates and manually execute the replication mechanism every time the configuration changes.

According to another preferred method of maintaining the replicated naming service, the hosts are time synchronized and a time delay can be used to prevent different hosts from attempting to update the naming servers at the same time. Considering that the amount of information in a configuration file may vary (e.g., from a few to hundreds of network elements), the time delay implementation promotes better use of network bandwidth in time, which prevents bursts of traffic in the communications network.

According to one method of implementing periodic updates and time delays, the replication mechanism is executed with options that determine a starting hour, a time delay (in minutes), and the days of the week when the replicated naming servers must be updated. As stated above, each of the hosts includes a list of hosts in the system. Based on the list of hosts, the replication mechanism calculates when each host should attempt to start updating the replicated naming servers by considering the starting time, the time delay, and the position of the host in the list of hosts. Once the starting time for each of the hosts is calculated, the replication mechanism is scheduled to execute at that given time for each host on the chosen days of the week.

In one preferred embodiment based on the Unix operating system, the scheduling of periodic updates is achieved by creating Unix *crontab* entries, which are automatically managed by the *cron* application. The Unix shell script created to detect the designated hosts 26d and to invoke the naming service builder application 50 can be placed in the *crontab* of each host 26 and executed periodically. The determination of the periodicity for the updates and the creation of *crontab* entries in the hosts are preferably part of the replication mechanism set up process.

As an example, assume that a cable system includes five (5) EMS sites and five (5) designated hosts running replicated naming servers. At the scheduled time for the periodic update for a particular host, the shell script is called in that particular host via the *crontab.* The shell script detects that five (5) replicated naming servers are to be updated and invokes the naming service builder application five (5) times, directing it to separately update each one of the replicated naming servers one at a time. As a result of the configured time delays, no other EMS site in the cable system is attempting to update the replicated naming servers. Other scheduling applications and techniques known to those of ordinary skill in the art can also be used to automatically cause the replication mechanism to execute and update the naming servers.

Accordingly, the replicated naming service created and maintained according to the present invention, provides network configuration and topology information to a NMS in a manner that is reliable, highly available and independent of the NMS/EMS. The replicated naming service is also capable of automatically updating the configuration and topology information as the network topology changes.

Modifications and substitutions by one of ordinary skill in the art are considered to be within the scope of the present invention, which is not to be limited except by the following claims.

## Claims

1. A method of creating and maintaining a replicated naming service to support a communications network, said communications network comprising a network management system (NMS) and a plurality of element management systems (EMS), wherein each of said element management systems comprises at least one host forming an EMS subnetwork, said method comprising:
selecting at least one designated host in each said EMS subnetwork for hosting a replicated naming server;
setting up a replication mechanism in each said at least one host;
identifying said replicated naming servers; and
publishing local configuration information for each of said hosts to each of said replicated naming servers, wherein each of said replicated naming servers provides substantially complete configuration information pertaining to said communications network, and wherein said NMS is capable of obtaining said substantially complete configuration information to discover a topology of said communications network by accessing any one of said replicated naming servers.

2. The method of claim 1 wherein each said EMS subnetwork includes only one replicated naming server.

3. The method of claim 1 wherein identifying said replicated naming server comprises searching a hosts file for a specific name pattern.

4. The method of claim 1 wherein publishing said local configuration information is performed by executing a naming service builder application in each of said hosts.

5. The method of claim 4 wherein said naming service builder application is a Common Object Request Broker Architecture (CORBA) application.

6. The method of claim 4 wherein executing said naming service builder application comprises:
reading at least one configuration file in said host;
creating an interoperable object reference (IOR) for each entry in said configuration file; and
binding said IOR to a name in each said replicated naming server.

7. The method of claim 1 wherein publishing said local configuration information is performed periodically for each of said hosts.

8. The method of claim 7 further comprising scheduling a time for publishing said local configuration information for each of said hosts.

9. The method of claim 1 wherein publishing said local configuration information includes publishing said local configuration information at different times for each of said hosts.

10. The method of claim 1 wherein said communications network is a cable system.

11. A method of publishing network configuration information to a naming service supporting a communications network, said communications network comprising a network management system (NMS) and a plurality of element management systems (EMS), wherein each of said element management systems comprises at least one host forming an EMS subnetwork, said method comprising:
reading at least one local configuration file in said at least one host of at least one EMS subnetwork, wherein said local configuration file includes local configuration information for said host;
creating an interoperable object reference (IOR) for each entry in said configuration file; and
binding said IOR to a name in at least one naming server, wherein said NMS is capable of obtaining configuration information for said at least one EMS subnetwork by accessing said at least one naming server.

12. The method of claim 11 wherein each of said replicated naming servers is located in a respective said EMS subnetwork.

13. The method of claim 12 wherein each said EMS subnetwork includes only one naming server.

14. A system for creating and maintaining a replicated naming service for use in a communications network, said communications network comprising a network management system (NMS) and a plurality of element management systems (EMS), wherein each of said element management systems comprises at least one host forming an EMS subnetwork, said system comprising:
a single replicated naming server located in a designated host in each said EMS subnetwork, wherein said replicated naming server provides substantially complete configuration information for said communications network to said NMS;
at least one local configuration file located in each said host for storing local configuration information pertaining to said host; and
a naming service builder application executed in each said host for periodically publishing said local configuration information to each of said replicated naming servers.

15. The system of claim 14 wherein said naming service builder application comprises:
code for reading said local configuration file;
code for creating an interoperable object reference (IOR) for each entry in said local configuration file; and
code for binding said IOR to a name in each said replicated naming server located in each said designated host.

16. The system of claim 15 wherein said naming service builder application is a Common Object Request Broker Architecture (CORBA) application.

17. The system of claim 15 wherein each said naming service builder application publishes said local configuration information at a scheduled time.

18. The system of claim 15 wherein each said naming service builder application publishes said local configuration information at a different time.

19. A system for maintaining a naming service to support a communications network, said communications network comprising a network management system (NMS) and a plurality of element management systems (EMS), wherein each of said element management systems comprises at least one host forming an EMS subnetwork, said system comprising:
means for identifying a replicated naming server in each said EMS subnetwork;
means for periodically publishing local configuration information from each of said hosts to each said replicated naming server in each said EMS subnetwork; and
means for scheduling a time for each of said hosts to publish said local configuration information, wherein each of said hosts publishes said local configuration information at different times.

20. The system of claim 19 wherein said means for identifying a replicated naming server uses a search command to search a hosts file for a specific name pattern.

21. The system of claim 19 wherein said means for periodically publishing includes a naming service builder application.

22. The system of claim 19 wherein said means for periodically publishing comprises:
means for reading said local configuration file;
means for creating an interoperable object reference (IOR) for each entry in said local configuration file; and
means for binding said IOR to a name in each said replicated naming server located in each said designated host.

23. The system of claim 19 wherein said means for scheduling a time uses *crontab* entries.

24. A naming service builder computer program product stored on a storage medium, wherein said naming service builder computer program product is for use in a naming service including at least one naming server, said naming service builder computer program product comprising:
code for reading a local configuration file for a host in a communications network;
code for creating an interoperable object reference (IOR) for each entry in said configuration file; and
code for binding said IOR to a name in said at least one naming server, wherein said at least one replicated naming server provides configuration information for said communications network.
